# EUROPEAN PATENT APPLICATION

(11) **EP 2 341 234 A2**
(43) Date of publication of application: **06.07.2011**
(21) Application number: 10187183.8
(22) Date of filing: 11.10.2010
(51) Int. Cl.: F02D 19/06

(54) **Direct injection bi-fuel system for combustion engines**

(30) Priority: 31.12.2009 US 291590 P
(71) Applicant: Indopar B.V., 5657 ES Eindhoven (NL)
(72) Inventor: Ten Broeke, Sebastiaan Martinus Emanuel, 5492, St Oedenrode (NL)
(74) Representative: Dorna, Peter

(57) **Abstract**

A direct injection bi-fuel system (100) includes a first fuel subsystem (110), a second fuel subsystem (150), and a junction (124) configured to receive first fuel from the first fuel subsystem when the system is operating in a first fuel consuming mode, and to receive second fuel from the second fuel subsystem when the system is operating in a second fuel consuming mode. A pump (126) is configured to receive the fuel passing through the junction (124) and pump the fuel to a high pressure rail (180) of a combustion engine, and a purging unit (250) is configured to purge the second fuel from the rail (180) when the system is switched from the second fuel consuming mode to the first fuel consuming mode. The purging unit (258) includes a piston (258a) and is configured to receive the second fuel on one side of the piston (258a) and the first fuel on the other side of the piston (258a).

## Description

### FIELD

The present invention is related to a direct injection bi-fuel (or monofuel) system for a combustion engine that is configured to separately provide fuel from two sources. In particular, but not exclusively, the system may be a direct injection bi-fuel system configured to separately provide two types of fuel, such as liquid fuel and liquefied gas fuel, as desired, to a combustion engine.

### BACKGROUND

Direct injection fuel systems are configured to inject fuel directly into a cylinder of a combustion engine instead of premixing the fuel with air in separate intake ports. This configuration allows for controlling combustion and emissions more precisely, but it demands more advanced engine management technologies. The higher torque provided by modern direct injection gasoline engines is the result of the synergistic effect of direct injection, charging, and variable valve timing. In combination, these aspects of direct injection technology allow for great flexibility in the engine tuning. As a result, there tends to be a superior cylinder charge with a reduced tendency to knock.

In the future, it is expected that charged direct injection engines will be able to produce specific torque values of 175-200 Newton-meters per liter of piston displacement with specific outputs of 100 kW per liter piston displacement. It is expected that the new direct injection gasoline engines will be characteristic for their high torque at low speeds. In comparison to charged port fuel injection engines, it is expected that torque increases at lower speeds of up to 50% may be possible.

One opportunity associated with gasoline direct injection ("GDI") is the combination with a turbocharger which results in a dramatic increase in low speed torque which allows for engine downsizing without loss of overall vehicle performance. This combination of GDI, turbo charging/supercharger, and downsizing achieves about 15% greater economy.

GDI has multiple advantages that make it attractive under both current and projected market conditions. Moving the fuel delivery point from the intake ports to the cylinder eliminates the hang-up or storage of fuel in the ports, promotes more precise fuel delivery and allows an increase in compression ratio. These features combine, often in synergy with other engine improvements like turbo charging/supercharger and downsizing, to deliver increased fuel economy, reduced cold start emissions, and better engine performance.

In a downsized engine, conventional, naturally aspirated engines are replaced by smaller, turbocharged engines that deliver the same power. With direct injection, a one-third reduction engine displacement may allow for fuel savings of up to 15%, while generating the same level of power.

In the automotive industries, the direct injection technology for petrol, or gasoline, has already been introduced for several engine types. This means that the common existing liquefied petroleum gas ("LPG") technology has to be changed or improved or completely redesigned in order to be utilized along with the existing direct injection technology for petrol.

There are at least two options to use LPG for direct injection engines. First, provide indirect LPG injection through port injection, and second, provide direct LPG injection into the burning chamber. The indirect LPG injection system is mainly based on the existing master slave sequential injection that is also used for indirect injection engines. The direct LPG injection system is a new system that is still in development. When using the direct injection technology with LPG, the advantages for environment may be obtained through reduction of carbon dioxide and particles into the atmosphere.

### SUMMARY

In normal operation, the direct injection combustion engine uses a high pressure fuel pump, high pressure fuel rail, and direct injectors to directly inject the fuel into the engine. To reduce cost and overall system complexity, it is desirable to use the high pressure components for both types of fuel. To make this possible, the system should be able to replace the first type of fuel with the second type of fuel and vice-versa.

There are physical challenges that may occur when switching between two types of fuel. First, when replacing one fuel with another fuel during engine operation, undesirable mixing can occur. Second, when the system is using liquefied gas fuel as one type of fuel and liquid fuel as the other type of fuel, depending on gas composition and temperature, it is possible that the pressure of the liquefied gas system will operate at a higher pressure than the liquid fuel system.

It is an aspect of the present invention to provide a direct injection bi-fuel system that can provide a first type of fuel and a second type of fuel, as desired, to a combustion engine.

According to an embodiment of the present invention, there is provided a direct injection bi-fuel system that includes a first fuel subsystem and a second fuel subsystem. The first fuel subsystem includes a first fuel tank configured to hold a supply of first fuel, and a first fuel pump configured to pump the first fuel out of the first fuel tank. The second fuel subsystem includes a second fuel tank configured to hold a supply of second fuel, and a second fuel pump configured to pump the second fuel out of the second fuel tank. The direct injection bi-fuel system includes a junction configured to receive first fuel from the first fuel subsystem when the system is operating in a first fuel consuming mode, and to receive second fuel from the second fuel subsystem when the system is operating in a second fuel consuming mode, a high pressure pump configured to receive the fuel passing through the junction and pump the fuel to a high pressure rail of a direct injection combustion engine, and a purging unit configured to purge the second fuel from the high pressure rail responsive to the system being switched from the second fuel consuming mode to the first fuel consuming mode. The purging unit includes a piston and is configured to receive the second fuel on one side of the piston and the first fuel on the other side of the piston. In an embodiment, the first fuel is a liquid fuel and the second fuel is a liquefied gas fuel.

According to an embodiment of the present invention, there is provided a direct injection bi-fuel system that includes a first fuel subsystem and a second fuel subsystem. The first fuel subsystem includes a first fuel tank configured to hold a supply of first fuel, and a first fuel pump configured to pump the first fuel out of the first fuel tank. The second fuel subsystem includes a second fuel tank configured to hold a supply of second fuel, and a second fuel pump configured to pump the second fuel out of the second fuel tank. The direct injection bi-fuel system includes a junction configured to receive first fuel from the first fuel subsystem and to receive second fuel from the second fuel subsystem, a high pressure pump configured to receive the fuel passing through the junction and pump the fuel to a high pressure rail of a direct injection combustion engine, and a boost pump configured to receive fuel from the first fuel pump and increase the pressure of the fuel being provided to the junction to purge the second fuel from the high pressure rail responsive to a switch over from the second fuel to the first fuel. In an embodiment, the first fuel is a liquid fuel and the second fuel is a liquefied gas fuel.

It is an aspect of the present invention to provide a method for switching between two types of fuel, for example, between a liquid fuel, such as petrol or diesel or gasoline, to a liquefied gas fuel, such as liquefied petroleum gas, for a direct injection combustion engine.

According to an embodiment of the present invention, there is provided a method of switching between two fuels being provided to a direct injection combustion engine. The method includes pumping a first fuel to a high pressure pump configured to pump the first fuel to a high pressure rail of the direct injection combustion engine during a first fuel consuming mode, switching between the first fuel consuming mode and a second consuming mode, pumping a second fuel to one side of a piston contained within a purging unit, pumping the first fuel to an opposite side of the piston contained within the purging unit, purging the first fuel from the system by increasing the pressure of the second fuel with the purging unit and pumping the increased pressure second fuel to the high pressure fuel pump, and pumping the second fuel to the high pressure rail without increasing the pressure of the second fuel with the purging unit. In an embodiment, the first fuel is a liquefied gas fuel and the second fuel is a liquid fuel.

According to an embodiment of the present invention, there is provided a method of switching between two fuels being provided to a direct injection combustion engine. The method includes pumping a first fuel to a high pressure pump configured to pump the first fuel to a high pressure rail of the direct injection combustion engine during a first fuel consuming mode, switching between the first fuel consuming mode and a second fuel consuming mode, pumping a second fuel to a boost pump, purging the first fuel from the system by increasing the pressure of the second fuel with the boost pump and pumping the increased pressure second fuel to the high pressure fuel pump, and pumping the second fuel to the high pressure rail without increasing the pressure of the second fuel with the boost pump. In an embodiment, the first fuel is a liquefied gas fuel and the second fuel is a liquid fuel.

These and other aspects, features, and advantages of the invention will become apparent from the following detailed description, the accompanying drawings, and the appended claims.

### BRIEF DESCRIPTION OF DRAWINGS

Embodiments of the invention will now be described, by way of example only, with reference to the accompanying schematic drawings in which corresponding reference symbols indicate corresponding parts, and in which:

Figure 1 illustrates an embodiment of a direct injection bi-fuel system for a combustion engine;

Figure 2 illustrates the direct injection bi-fuel system of Figure 1 in a first fuel operating mode;

Figure 3 illustrates the direct injection bi-fuel system of Figure 1 in a second fuel operating mode;

Figure 4 illustrates another embodiment of a direct injection bi-fuel system for a combustion engine;

Figure 5 illustrates the direct injection bi-fuel system of Figure 4 in a first fuel operating mode;

Figure 6 illustrates the direct injection bi-fuel system of Figure 4 in a second fuel operating mode;

Figure 7 illustrates the direct injection bi-fuel system of Figure 4 when the system is being switched from the second fuel operating mode of Figure 6 and the first fuel operating mode of Figure 5; and

Figures 8A-8C illustrate and embodiment of a pressure limiting non-return valve that may be used with the embodiments of the direct injection bi-fuel systems of Figures 1 and 4.

### DETAILED DESCRIPTION

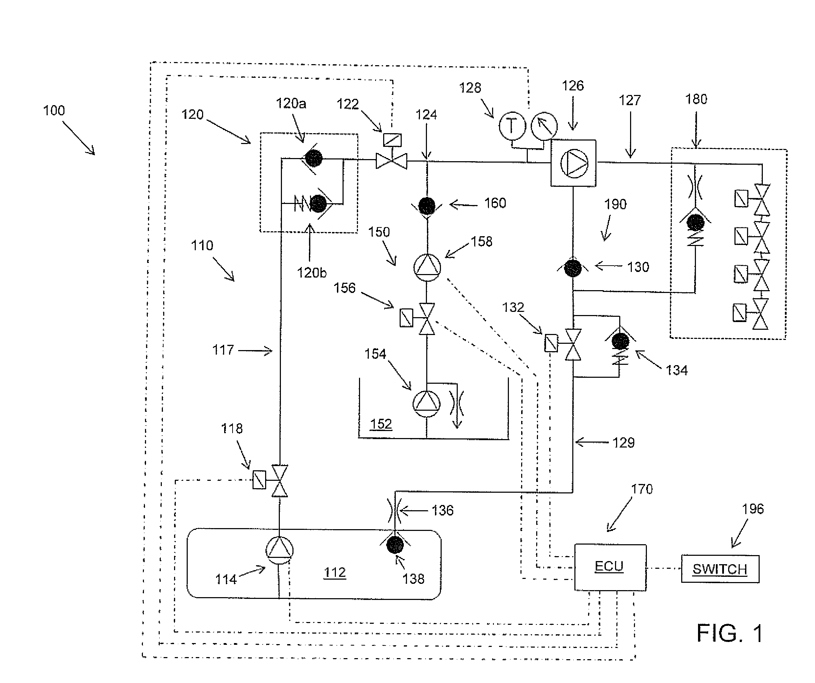

Figure 1 illustrates a direct injection bi-fuel system 100 for a combustion engine according to an embodiment of the present invention. As described in further detail below, the system 100 is configured to switch between two types of fuel being provided to the engine. One of the fuels may be a liquid fuel, such as petrol, diesel, or gasoline, and the other fuel may be a liquefied gas fuel, such as a liquefied petroleum gas ("LPG"), which may include propane or butane or mixtures thereof. Although the discussion below refers to a liquid fuel and a liquefied gas fuel as being the two fuels that are used in the direct injection bi-fuel system 100, it should be understood that other combinations of fuels may be used. The illustrated and described embodiments are not intended to be limiting in any way.

As illustrated in Figure 1, the direct injection bi-fuel system 100 includes a liquefied gas fuel subsystem 110 and a liquid fuel subsystem 150, as well as high pressure components that are located between the subsystems 110, 150 and the combustion engine, as described in further detail below.

The liquefied gas fuel subsystem 110 includes a fuel storage tank 112 configured to hold a supply of liquefied gas or vapor fuel, such as LPG. In an embodiment, the pressure of the liquefied gas fuel in the fuel storage tank 112 may be about 2-16 bar. A fuel pump 114 is mounted in the fuel storage tank 112. The fuel pump 114 may be any type of fuel pump that can be configured to remove the liquefied gas from the storage tank 112 via suction and pump the liquefied gas under an elevated pressure through a fuel supply line 117, through a safety lock-off valve 118, through a pressure limiting non-return valve 120, through a lock-off valve 122, through a junction 124, and to a high pressure fuel pump 126.

The pressure limiting non-return valve 120 is depicted in Figure 1 as having a non-return valve 120a and a pressure limiting valve 120b. The non-return valve 120a and the pressure limiting valve 120b may be part of a single integrated valve that performs the functions of a non-return valve and a pressure limiting valve and therefore may together be called a pressure limiting non-return valve 120. The non-return valve 120a is configured to prevent liquid fuel from entering the liquefied gas fuel subsystem 110, and the pressure limiting valve 120b is configured to limit the differential system pressure between the lock-off valve 122 and the non-return valve 120a.

The lock-off valve 122 is configured to prevent liquefied gas fuel from entering the liquid fuel system 150, which may cause undesired mixing and consumption of fuel. The junction 124 joins the liquefied gas fuel subsystem 110 and the liquid fuel subsystem 150 so that the liquefied gas fuel and the liquid fuel may be individually supplied to the high pressure fuel pump 126. In between the junction 124 and the high pressure fuel pump 126 is a combined pressure and temperature sensor 128 that is configured to measure the temperature and the pressure of the fuel being supplied to the high pressure fuel pump 126. In an embodiment, a second pressure and temperature sensor (not shown) may be provided on the fuel storage tank 112 and be configured to measure the pressure and temperature of the fuel in the fuel storage tank 112.

The high pressure fuel pump 126 is connected to a high pressure fuel line 127 and is configured to pump the fuel, whether the fuel is liquid fuel or liquefied gas fuel, at an elevated pressure to a high pressure fuel rail and fuel injectors, collectively designated as 180 in Figure 1, of a direct injection combustion engine. The pressure of the fuel in the high pressure rail may be in the range of about 20 bar to about 200 bar, or more. Although Figure 1 schematically illustrates a four cylinder combustion engine configuration, the engine may include additional cylinders and/or high pressure pumps. The illustrated embodiment is not intended to be limiting in any way.

A liquefied gas fuel return subsystem 190 is connected to the high pressure fuel rail and to the high pressure fuel pump 126 and is configured to provide a return path for the liquefied gas fuel to the fuel storage tank 112 in the event that pressure relief for the high pressure fuel rail 180 or the high pressure fuel pump 126 is needed, and/or if vapor bubbles need to be removed from the supply of the liquefied gas fuel. The liquefied gas fuel return subsystem 190 includes a non-return valve 130 that is configured to prevent liquefied gas fuel from entering the high pressure fuel pump 126 by a return fuel line 129, and a lock-off valve 132 that is configured to prevent liquid fuel from entering the liquefied gas fuel subsystem 110 when the liquid fuel is being supplied to the combustion engine, which may cause undesirable mixing and consumption of fuel. A pressure limiting valve 134 is configured to limit the differential system pressure between the lock-off valve 132 and the non-return valve 130.

Any liquefied gas fuel that is returned from the high pressure components of the system, such as the high pressure fuel pump 126 and the high pressure fuel rail, flow through the return fuel line 129, through a restriction 136, through a non-return valve and into the fuel storage tank 112, as illustrated in Figure 1. The pressure of the liquefied gas fuel that is returned to the fuel storage tank is typically in between the pressure of the liquefied gas fuel in the fuel storage tank 112 and the pressure of the liquefied gas fuel that is supplied from the high pressure fuel pump 126 to the high pressure fuel rail 180.

A non-return valve 138 is provided at the fuel storage tank 112 and is configured to prevent fuel leakage in case of damage to the liquefied gas fuel subsystem 110. The restriction 136, which may be a fixed or variable restriction, is configured to control the elevated system pressure by the flow through the fuel pump 114. The pressure increase in relation with the fuel storage tank 112 may be within the range of between about 2 bar and about 10 bar.

The liquid fuel subsystem 150 includes a fuel storage tank 152 configured to hold a supply of liquid fuel, such as gasoline, petrol, or diesel. In an embodiment, the pressure of the liquid fuel in the fuel storage tank may be about 6 bar. A fuel pump 154 is mounted in the fuel storage tank 152 and is configured to remove the liquid fuel from the fuel storage tank 152 via suction and pump the liquid fuel through a lock-off valve 156. Any suitable fuel pump may be used to pump the liquid fuel from the fuel storage tank 152 through the lock-off valve 156. The lock-off valve 156 is configured to prevent liquid fuel from entering the junction 124 when the liquefied gas fuel is being supplied to the junction 124 via the liquefied gas fuel subsystem 110, described above, and cause undesirable mixing and consumption of fuel.

A supplementary fuel pump 158, or boost pump, may be used to elevate the pressure of the liquid fuel prior to the liquid fuel entering the junction 124. This may be particularly desirable when the fuel consuming mode is switched from the liquefied gas fuel consuming mode to the liquid fuel consuming mode, as discussed in greater detail below. The pressure increase provided by the supplementary fuel pump 158 in relation with the basic liquid fuel pressure of the liquid fuel supply may be within the range of between about 2 bar and about 10 (or higher) bar. A non-return valve 160 is configured to prevent liquefied gas fuel from entering the liquid fuel subsystem 150 and causing undesirable mixing and consumption of fuel.

As illustrated in Figure 1, a controller 170 is in communication with the liquefied gas fuel pump 114, the lock-off valves 118, 122, the temperature/pressure sensor 128 (and any temperature/pressure sensor provided on the fuel tank 112), the lock-off valves 132, 156, and the supplementary fuel pump 158 and is configured to control whether the valves 118, 122, 132, 156 are in an open configuration or a closed configuration, and whether the pumps 114, 158 are on or off The controller 170 receives data from the temperature/pressure sensor 128 (and optional temperature/pressure sensor provided on the fuel tank 112) and uses the data to control operation of the system via manipulation of the various valves and pumps that the controller 170 communicates with. The fuel pump 154 and the high pressure fuel pump 126 may also be in communication with the controller 170. The illustrated embodiment is not intended to be limiting in any way. A switch 196 is also in communication with the controller 170 and is located in a cabin of the vehicle so that an operator of the vehicle may use the switch 196 to switch between the fuel consuming modes of the system 100, as discussed in further detail below.

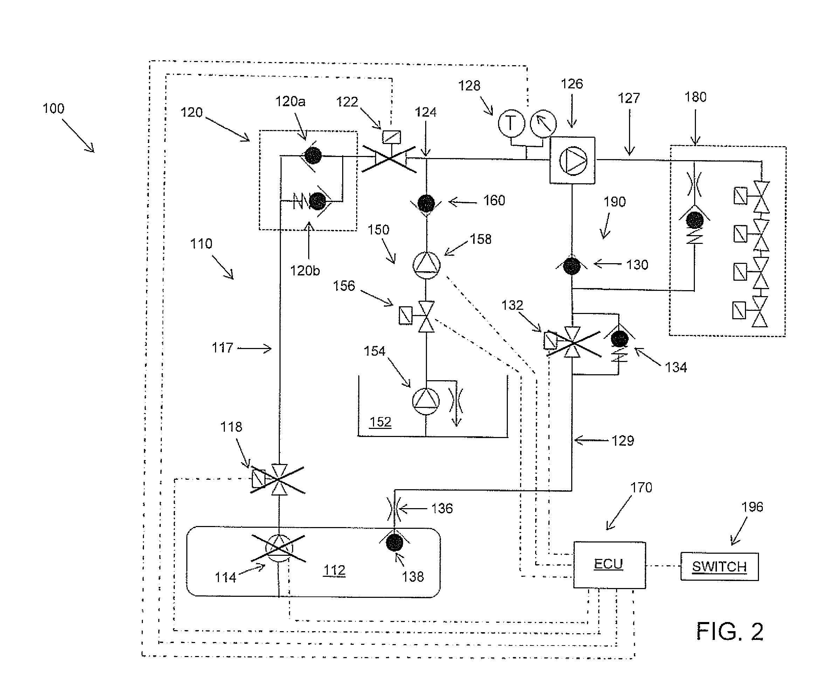

Figure 2 illustrates when the combustion engine is running on the liquid fuel, and the direct injection bi-fuel system 100 is operating in the liquid fuel consuming mode. As illustrated in Figure 2, the fuel pump 154 is on so that the liquid fuel may be pumped from the fuel storage tank 152. The lock-off valves 118, 122, and 132 are in a closed configuration and the fuel pump 114 is off, as represented by the large X's over those components of the system 100. The non-return valve 160 is active to prevent any back flow of fuel from the junction 124 may not flow back into the liquid fuel subsystem 150. Any trapped liquefied gas or liquid fuel between the lock-off valve 122 and the non-return valve 120a will be relieved by the pressure limiting valve 120b. Any trapped liquefied gas or liquid fuel between the lock-off valve 132 and the non-return valve 130 will be relieved by the pressure limiting valve 134.

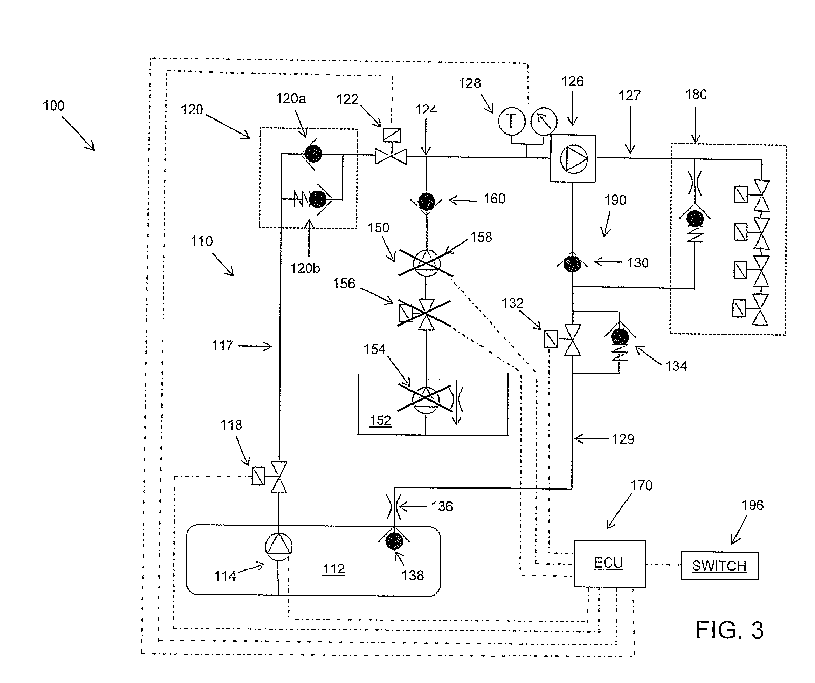

Figure 3 illustrated when the combustion engine is running on liquefied gas fuel, and the direct injection bi-fuel system 100 is operating in the liquefied gas fuel consuming mode. As illustrated in Figure 3, the fuel pump 114 is on so that the liquefied gas fuel may be pumped from the fuel storage tank 112. The lock-off valve 156 is in the closed configuration, and the fuel pump 154 and the supplementary fuel pump 156 are off, as represented by the large X's over those components of the system 100. The non-return valves 120, 130 and 138 are active. The controller 170 is configured to alter the operating parameters of the system 100 based on the liquefied gas fuel being used in such a manner that approximately 10-35% more fuel will be injected by the fuel injectors into the combustion engine. This increase in volume will result in stable and efficient behavior of the combustion engine.

When the combustion engine is operating on liquid fuel, and the direct injection bi-fuel system 100 is operating in the liquid fuel consuming mode, illustrated in Figure 2, the operator of the vehicle can switch to the liquefied gas fuel consuming mode, illustrated in Figure 3. To achieve this, the operator of the vehicle can operate the switch 196 that is located inside the cabin of the vehicle so that a signal is communicated to the controller 170. The controller 170 will coordinate the switching procedure.

Specifically, after operating the fuel selection switch 196 to select the liquefied gas fuel consuming mode, the fuel pump 114 will turn on, and the lock-off valves 118, 122, and 132 will be opened. In some situations, it may be necessary to activate the supplementary fuel pump 158, to decrease a pressure difference over the lock-off valve 122. After a delay, the lock-off valve 156 closes and the supplementary fuel pump 158 turns off, and optionally the fuel pump 154 turns off. The purging action may result in, as a consequence, some amount of liquid fuel ending up in the fuel storage tank 112, which has been found to be acceptable. At this point in time, the fuel in the high pressure line 127 and the high pressure fuel rail 180 still consists of liquid fuel. The controller 170 is programmed to determine a decay factor on the value in which the controller 170 parameters, and resulting control of the various system components that are in communication with the controller, are altered. The decay factor is a function of fuel consumption and physical system parameters. After the decay is finalized, the fuel system 100 has completed its switch-over to liquefied gas fuel.

When the combustion engine is operating on liquefied gas fuel, and the direct injection bi-fuel system 100 is operating in the liquefied gas fuel consuming mode, illustrated in Figure 3, the driver of the vehicle can switch to the liquid fuel consuming mode, illustrated in Figure 2. To achieve this, the driver of the vehicle can operate the switch 196 that is located inside the cabin of the vehicle. The controller 170 will coordinate the switching procedure.

Specifically, after operating the fuel selection switch 196, the fuel pump 154 (if the fuel pump 154 was already turned off) and the supplementary fuel pump 158 will turn on, the lock-off valve 156 will be opened, the lock-off valves 118, 122 will be closed (after some programmable delay), and the fuel pump 114 will be turned off. The supplementary fuel pump 158 is used to increase the pressure of the liquid fuel to about the pressure of the liquefied gas fuel that was being supplied to the high pressure fuel pump 126 so that the liquefied gas fuel may be purged from the system 100 via the liquefied gas fuel return subsystem 190. After a delay, the lock-off valve 132 will close. The delay is dependent on physical system parameters. After a second delay, the supplementary fuel pump 158 will turn off. This second delay is a function of fuel consumption and physical system parameters. The fuel in the high pressure fuel line 127 and the high pressure rail still consists of liquefied gas fuel. The controller 170 is programmed to determine a decay factor on the value in which the controller 170 parameters, and resulting control of the various system components that are in communication with the controller, are altered. The decay factor is a function of fuel consumption and physical system parameters. After the decay is finalized, the fuel system 100 has completed its switch-over to the liquid fuel consuming mode.

Because the high pressure fuel pump 126 and the high pressure fuel rail are used for the liquid fuel as well as for the liquefied gas fuel, the internal combustion engine will start on the fuel last used. In a hot engine, conditions starting on liquefied gas fuel may cause vapor lock problems in some applications. In those applications, a switch-over may take place during the starting of the engine.

After a switch-over from liquefied gas to liquid fuel, it is possible that some liquefied gas fuel may remain in the fuel system. Under those pressure/temperature conditions, it is possible that the gas transits in its vapor state, which may cause vapor lock. The controller 170 is configured to detect such an occurrence and is configured to respond by turning on the supplementary fuel pump 158 to pressurize the system 100 so that the system 100 may be flushed during liquefied gas fuel consuming mode and may be pressurized during liquid fuel consuming mode.

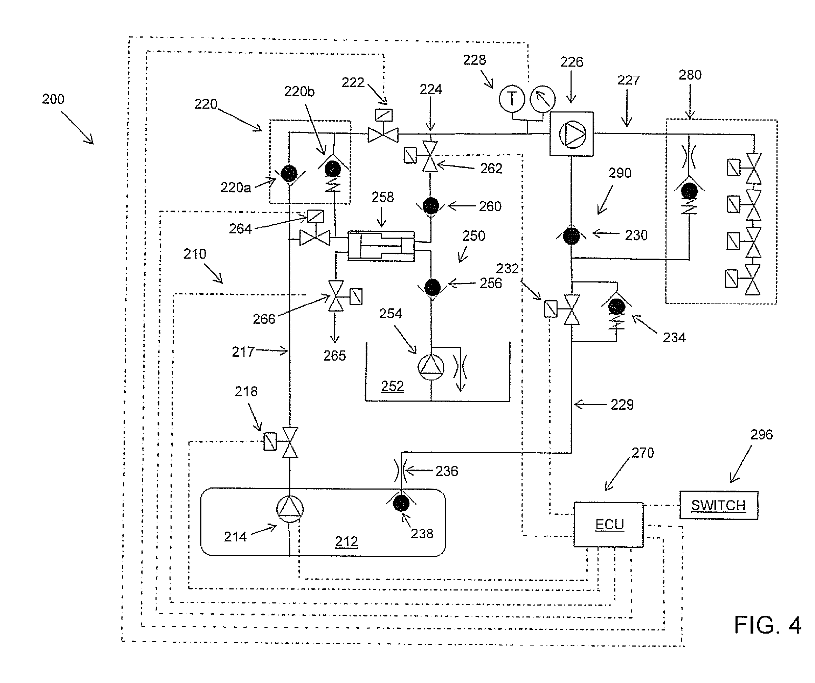

Figure 4 illustrates a direct injection bi-fuel system 200 for a combustion engine according to an embodiment of the invention. Similar to the direct injection bi-fuel system 100 described above, the direct injection bi-fuel system 200 of Figure 4 is configured to switch between two types of fuel being provided to the combustion engine. One of the fuels may be a liquid fuel, such as petrol, diesel, or gasoline, and the other fuel may be a liquefied gas fuel, such as LPG, which may include propane or butane or mixtures thereof. Although the discussion below refers to a liquid fuel and a liquefied gas fuel as being the two fuels that are used in the direct injection bi-fuel system 200, it should be understood that other combinations of fuels may be used. The illustrated and described embodiments are not intended to be limiting in any way.

As illustrated in Figure 4, the direct injection bi-fuel system 200 includes a liquefied gas fuel subsystem 210 and a liquid fuel subsystem 250, as well as high pressure components that are located between the subsystems 210, 250 and the combustion engine, as described in further detail below. One of the differences between the direct injection bi-fuel system 200 described below and the direct injection bi-fuel system 100 described above is the inclusion of a purging unit 258 in place of the supplementary fuel pump 158. As discussed in further detail below, the purging unit 258 is placed parallel with the liquefied gas fuel subsystem 210 and the liquid fuel subsystem 250, and is configured to replace the liquefied gas fuel in the fuel system 200 with the liquid fuel by means of a purging action.

As illustrated in Figure 4, the liquefied gas fuel subsystem 210 includes a fuel storage tank 212 configured to hold a supply of a liquefied gas vapor fuel, such as LPG. In an embodiment, the pressure of the liquefied gas fuel in the fuel storage tank 212 may be about 2-16 bar. A fuel pump 214 is mounted in the fuel storage tank 212. The fuel pump 214 may be of any suitable type of fuel pump that can be configured to remove the liquefied gas fuel from the fuel storage tank 212 via suction and pump the liquefied gas fuel under an elevated pressure thorough a fuel supply line 217, through a safety lock-off valve 218, through a pressure limiting non-return valve 220, through a lock-off valve 222, through a junction 224, and to a high pressure fuel pump 226.

The pressure limiting non-return valve 220 is depicted in Figure 4 as having a non-return valve 220a and a pressure limiting valve 220b. The non-return valve 220a and the pressure limiting valve 220b may be part of a single integrated valve that performs the functions of a non-return valve and a pressure limiting valve and therefore may together be called a pressure limiting non-return valve 220. The non-return valve 220a is configured to prevent liquid fuel from entering the liquefied gas fuel subsystem 210, and the pressure limiting valve 220b is configured to limit the differential system pressure between the lock-off valve 222 and the non-return valve 220a.

The lock-off valve 222 is configured to prevent liquefied gas fuel from entering the liquid fuel system 250, which may cause undesired mixing and consumption of fuel. The junction 224 joins the liquefied gas fuel subsystem 210 and the liquid fuel subsystem 250 so that the liquefied gas fuel and the liquid fuel may be individually supplied to the high pressure fuel pump 226. In between the junction 224 and the high pressure fuel pump 226 is a combined pressure and temperature sensor 228 that is configured to measure the temperature and the pressure of the fuel being supplied to the high pressure fuel pump 226.

The high pressure fuel pump 226 is connected to a high pressure fuel line 227 and is configured to pump the fuel, whether the fuel is liquid fuel or liquefied gas fuel, at an elevated pressure to a high pressure fuel rail and fuel injectors, collectively designated as 280 in Figure 4, of a direct injection combustion engine. The pressure of the fuel in the high pressure rail may be in the range of about 20 bar to about 200 bar. Although Figure 4 schematically illustrates a four cylinder combustion engine configuration, the engine may include additional cylinders, high pressure pumps, electronic control units, etc. The illustrated embodiment is not intended to be limiting in any way.

A liquefied gas fuel return subsystem 290 is connected to the high pressure fuel rail and to the high pressure fuel pump 226 and is configured to provide a return path for the liquefied gas fuel to the fuel storage tank 212 in the event that pressure relief for the high pressure fuel rail 280 or the high pressure fuel pump 226 is needed, to provide vapor bubbles, as needed, and/or to cool down the temperature of the supply of the liquefied gas fuel. The liquefied gas fuel return subsystem 290 includes a non-return valve 230 that is configured to prevent liquefied gas fuel from entering the high pressure fuel pump 226 by a return fuel line 229, and a lock-off valve 232 that is configured to prevent liquid fuel from entering the liquefied gas fuel subsystem 210 when the liquid fuel is being supplied to the combustion engine, which may cause undesirable mixing and consumption of fuel. A pressure limiting valve 234 is configured to limit the differential system pressure between the lock-off valve 232 and the non-return valve 230.

Any liquefied gas fuel that is returned from the high pressure components of the system, such as the high pressure fuel pump 226 and the high pressure fuel rail, flow through the return fuel line 229, through a restriction 236, through a non-return valve and into the fuel storage tank 212, as illustrated in Figure 4. The pressure of the liquefied gas fuel that is returned to the fuel storage tank is typically in between the pressure of the liquefied gas fuel in the fuel storage tank 212 and the pressure of the liquefied gas fuel that is supplied from the high pressure fuel pump 226 to the high pressure fuel rail and injectors 280.

A non-return valve 238 is provided at the fuel storage tank 212 and is configured to prevent fuel leakage in case of damage to the liquefied gas fuel, subsystem 210. The restriction 236 is configured to control the elevated system pressure by the flow through the fuel pump 214. The pressure increase in relation with the fuel storage tank 212 may be within the range of between about 2 bar and about 10 bar.

The liquid fuel subsystem 250 includes a fuel storage tank 252 configured to hold a supply of a liquid fuel such as gasoline, petrol or diesel. In an embodiment, the pressure of the liquid fuel in the fuel storage tank may be about 6 bar. A fuel pump unit 254 is mounted in the fuel storage tank 252 and is configured to remove the liquid fuel from the fuel storage tank 252 via suction and pump the liquid fuel through a non-return valve 256 an to the purging unit 258. The non-return valve 256 is configured to prevent the liquid fuel from running back into the fuel tank 212 during a purging action of the purging unit 258. A non-return valve 260 is configured to prevent liquefied gas fuel from entering the liquid fuel subsystem 250, which may cause unwanted mixing and consumption of fuel. A lock-off valve 262 is configured to prevent liquid fuel from entering the liquefied gas fuel subsystem 210, which may cause unwanted mixing and consumption of fuel.

The purging unit 258 is placed parallel with the liquefied gas fuel subsystem 210 and the liquid fuel subsystem 250. The purging unit 258 includes a piston 258a that is configured to create a pressure increase in the liquid fuel to create a purging action of the fuel. The liquefied gas fuel side of the purging unit 25 is connected to the supply fuel line 217 via a lock-off valve 264. A second lock-off valve 266 is connected to the liquefied gas fuel side of the purging unit 258 and is configured to slowly relieve the pressure of the purging unit 258 after the purging action of the purging unit 258 has been completed. The relieved liquefied gas fuel may be purged in an intake manifold or in a liquid fuel breather system, represented by 265 in Figure 4.

The pressure increase provided by the purging unit 258 is related to the pressure in the liquefied gas fuel supply line 217, which is higher than the pressure of the liquid fuel after the fuel pump 254 and the physical parameters of the purging unit 258. The operation of the purging unit 258 is discussed in further detail below with respect to the switching of the direct injection bi-fuel system 200 from the liquefied gas fuel consuming mode to the liquid fuel consuming mode.

As illustrated in Figure 4, a controller 270 is in communication with the liquefied gas fuel pump 214, the lock-off valves 218, 222, 232, 262, 264, 266, and the temperature/pressure sensor 228, and is configured to control whether the valves 218, 222, 232, 262, 264, 266 are in an open configuration or a closed configuration, and whether the pump 214 is on or off. The controller 270 receives data from the temperature/pressure sensor 228 and uses the data to control operation of the system via manipulation of the various valves and pumps that the controller 270 communicates with. The fuel pump 254 and the high pressure fuel pump 226 may also be in communication with the controller 270. The illustrated embodiment is not intended to be limiting in any way. A switch 296 is also in communication with the controller 270 and is located in a cabin of the vehicle so that an operator of the vehicle may use the switch 296 to switch between the fuel consuming modes of the system 200, as discussed in further detail below.

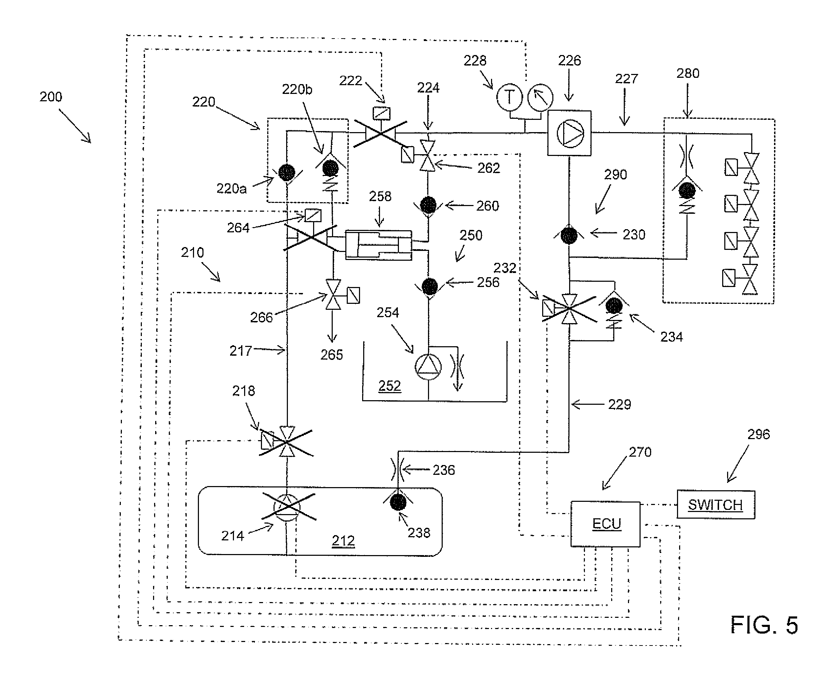

Figure 5 illustrates when the combustion engine is running on the liquid fuel, and the direct injection bi-fuel system 200 is operating in the liquid fuel consuming mode. As illustrated in Figure 5, the fuel pump 254 is on, the lock-off valves 218, 222, 264, and 232 are in a closed configuration and the fuel pump 214 is off, as represented by the large X's over those components of the system 200. The non-return valves 256 and 260 are active. Any trapped liquefied gas or liquid fuel in between the lock-off valve 222 and the non-return valve 220a is relieved by the pressure limiting valve 220b. Any trapped liquefied gas fuel or liquid fuel between the lock-off valve 232 and the non-return valve 230 is relieved by the pressure limiting valve 234.

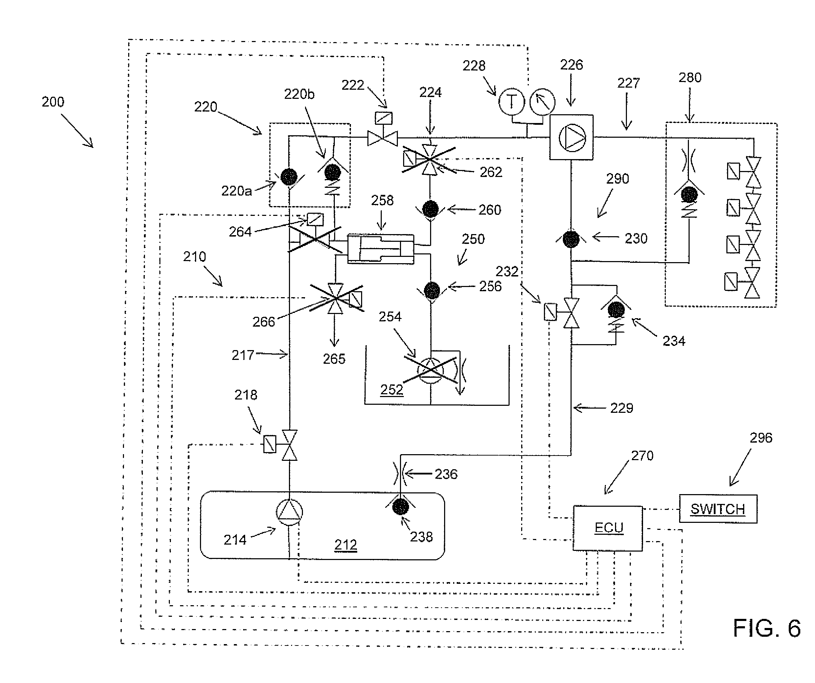

Figure 6 illustrates when the combustion engine is running on the liquefied gas fuel, and the direct injection bi-fuel system 200 is operating in the liquefied gas fuel consuming mode. As illustrated in Figure 6, the fuel pump 214 is on, the lock-off valve 262, 264, and 266 are in a closed configuration, and the fuel pump 254 is off. The non-return valves 220a, 230, and 238 are active. The controller 270 is configured to alter the operating parameters of the system 200 based on the liquefied gas fuel being used in such a manner that approximately 20% more fuel will be injected by the fuel injectors into the combustion engine. This increase in volume will result in stable and efficient behavior of the combustion engine.

When the combustion engine is running on liquid fuel, and the direct injection bi-fuel system 200 is operating in the liquid fuel consuming mode, illustrated in Figure 5, an operator of the vehicle can switch to the liquefied gas fuel consuming mode, illustrated in Figure 6, if desired. To achieve this, the operator of a vehicle can operate the switch 296 that is located inside the cabin of the vehicle so that a signal is communication to the controller 270. The controller 270 will coordinate the switching procedure.

Specifically, after operating the fuel selection switch 296 to select the liquefied gas fuel consuming mode, the fuel pump 214 will turn on, and the loclc-off valves 218, 222, and 232 will be opened. In some situations, it may be necessary to temporarily activate the purging unit 258 by opening the lock-off valve 264, to decrease the pressure difference over lock-off valve 222. After a delay, the loclc-off valve 262 closes, and fuel pump 254 turns off, and optionally the purging unit 258 turns off by closing the lock-off valve 264. The purging action may cause, as a consequence, an amount of liquid fuel to end up in the fuel storage tank 212. The fuel in the high pressure rail 280 still consists of liquid fuel. The controller 270 is programmed to determine a decay factor on the value in which the controller 270 parameters, and resulting control of the various system components that are in communication with the controller, are altered. The decay factor is a function of fuel consumption and physical system parameters. After the decay is finalized, the fuel system 200 has completed its switch-over to liquefied gas fuel.

When the combustion engine is operating on the liquefied gas fuel, and the direct injection bi-fuel system 200 is operating in the liquefied gas fuel consuming mode, illustrated in Figure 6, the operator of the vehicle can switch to the liquid fuel consuming mode, illustrated in Figure 5, if desired. To achieve this, the operator of the vehicle can operate the fuel selection switch 296 that is located inside the cabin of the vehicle so that a signal is communication to the controller 270. The controller 270 will coordinate the switching procedure.

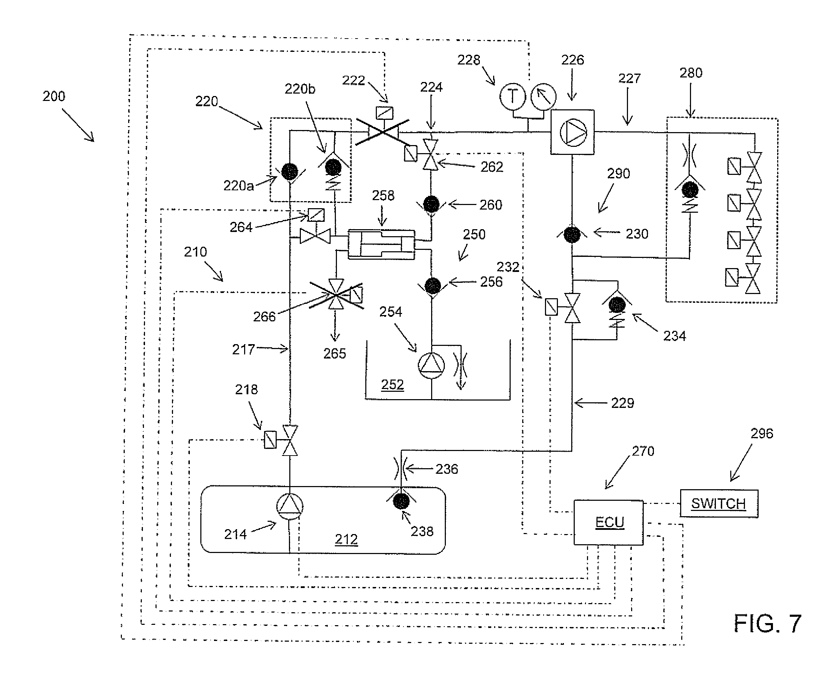

As illustrated in Figure 7, after the fuel selection switch 296 is operated to select the liquid fuel consuming mode, the lock-off valve 264 will open and lock-off valve 266 will be closed so that the purging unit 258 (with the liquid fuel in the right chamber of the purging unit 258) may be pressurized by the higher pressure liquefied gas fuel. For example, the liquefied gas fuel may have a pressure of about 2-16 bar as it enters the purging unit 258. The fuel pump 254 will turn on so that the liquid fuel may be supplied to the purging unit 258 at a pressure of about 6 bar, for example. The lock-off valve 222 will close, and the lock-off valve 262 will open to start the purging action. The lock-off valves 222, 262 close and open after some programmable delay. Because the pressure within the purging unit 258 is higher on the liquefied gas fuel side of the piston 258a, the piston 258a will move towards the liquid fuel side of the purging unit and will increase the pressure of the liquid fuel equal to or above the pressure of the liquefied gas fuel, for example 15 bar, depending on the pressure and temperature of the liquefied gas fuel in the storage unit 212, the chemical composition of the liquefied gas fuel. This increase in pressure of the liquid fuel allows the liquid fuel to purge the liquefied gas fuel out of the junction 224 and the high pressure fuel pump 226.

After a delay, which is dependent on physical system parameters and fuel consumption, the purging action has been completed. The lock-off valves 218, 264, and 232 will be closed, and the fuel pump 214 will be turned off. By opening the lock-off valve 266, the purging unit 258 may be reset to its starting configuration by allowing the pressure on the liquefied gas fuel side of the piston 258a to be slowly reduced to about 0 bar. The liquid fuel side of the piston 258a will reduce to the normal pressure of the liquid fuel, for example 6 bar.

Just after the purge action has been completed, the fuel in the high pressure rail 280 still consists of liquefied gas fuel. The controller 270 is programmed to determine a decay factor on the value in which the controller 270 parameters, and resulting control of the various system components that are in communication with the controller, are altered. The decay factor is a function of fuel consumption and physical system parameters. After the decay is finalized, the fuel system 200 has completed its switch-over to the liquid fuel consuming mode. The controller 270 determines a decay factor on the value in which the parameters of the controller 270 are altered. The decay factor is a function of fuel consumption and physical system parameters. After the decay is finalized and the liquid fuel has completely replaced the liquefied gas fuel in the high pressure fuel rail, the fuel system 200 has completed its switch-over.

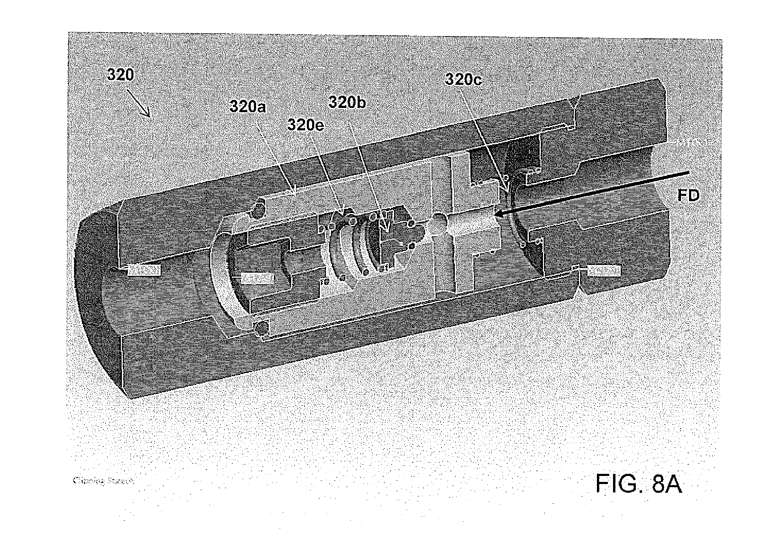

Figures 8A-8C illustrate the operation of an embodiment of a pressure limited non-return valve 320, which may be used in the direct injection bi-fuel systems 100, 200 described above as the pressure limited non-return valves 120, 220. It has been found that pressure peaks in the liquefied gas fuel may be realized during the liquefied gas fuel consuming mode of the direct injection bi-fuel systems 100, 200, especially during hot starts of the combustion engine on the liquefied gas fuel. The pressure limited non-return valves 120, 220 may be used to protect the liquefied gas fuel lock-off valves 122, 222 from getting damaged from the pressure peaks in the direct injection bi-fuel systems 100, 200 when pressure peaks are experienced by the systems 100, 200.

As illustrated in Figure 8A, the pressure limited non-return valve 320 includes a non-return valve portion 320a and a pressure relief valve portion 320b that both fit within a valve housing 320c. The non-return valve portion 320a is biased in a closed position, illustrated in Figure 8A, by a biasing member 320e, which may be a spring. When the non-return valve portion 320a is in the closed position, the fuel cannot flow through the valve in a first flow direction, which in indicated by arrow FD in Figure 8A. The pressure relief portion 320b is positioned within the non-return valve portion 302a and is biased in a closed position by a biasing member 320e, as illustrated in Figure 8A.

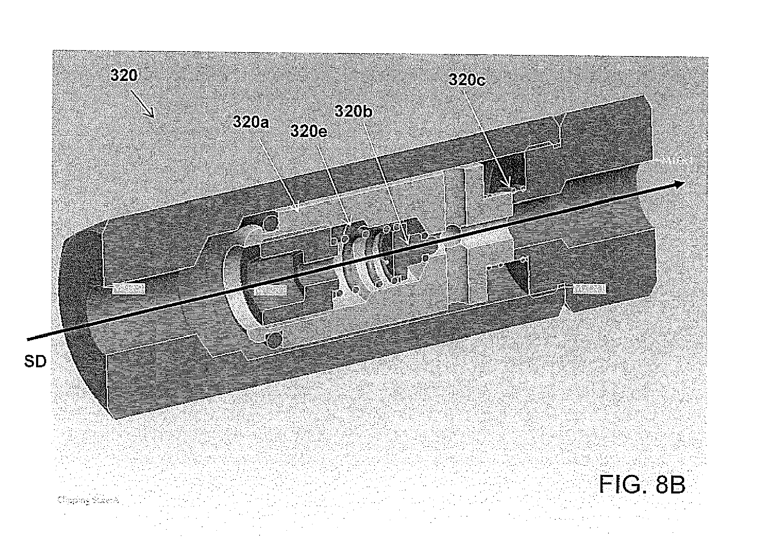

Figure 8B illustrates the non-return valve portion 320a in an open condition when the fuel, such as the liquefied gas fuel, is flowing in a second flow direction, which is indicated by arrow SD in Figure 8B. As illustrated, the pressure of the fuel flowing in the second flow direction SD moves the non-return valve portion 320a against the bias of the biasing member 320d such that the fuel may flow through the pressure limited non-return valve 320.

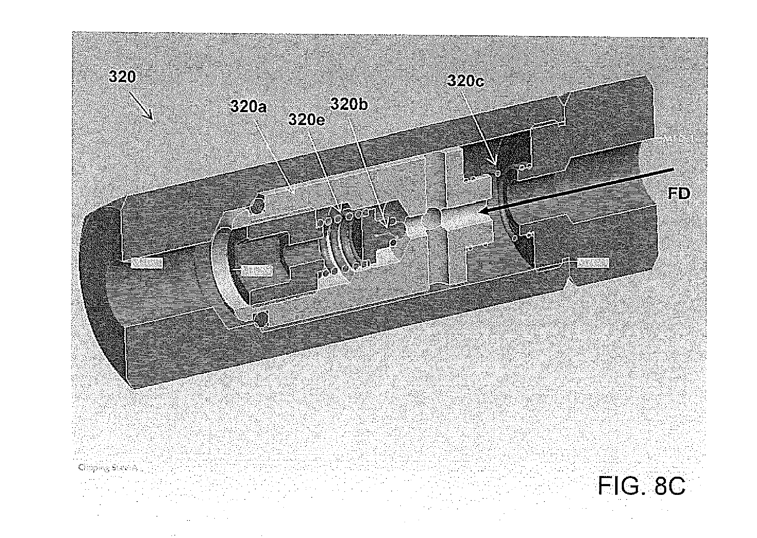

The biasing member 320e of the pressure relief valve portion 320b is configured to withstand a preset maximum pressure. As illustrated in Figure 8C, when the pressure created by the fuel flowing in the first flow direction FD, or the pressure of the fuel sitting stagnant on a downstream side of the pressure limited non-return valve 320, exceeds the preset maximum pressure, the biasing member 320e will allow the pressure relief valve portion 320b to open so that the pressure may be relieved to a level below the preset maximum pressure.

The pressure limited non-return valve 320 has the function of a non-return valve that prevents fuel from flowing in the wrong direction, and also has the function of a pressure relief valve that relieves the pressure that builds up as a result of preventing the fuel from flowing in the wrong direction. Without the pressure relief function, the pressure may be able to rise downstream of the non-return valve to a level that is above the maximum allowed pressure for the seats of a lock-off valve that is located just downstream of the non-return valve, which may damage the seats of the lock-off valve. By providing a pressure relief valve and non-return valve in a single pressure limited non-return valve 320, a compact design may be achieved and the lock-out valves located downstream of the pressure limited non-return valve may be protected.

While specific embodiments of the invention have been described above, it will be appreciated that the invention may be practiced otherwise than as described. The descriptions above are intended to be illustrative, not limiting. Thus, it will be apparent to one skilled in the art that modifications may be made to the invention as described without departing from the scope of the claims set out below.

## Claims

1. A direct injection bi-fuel system, comprising:
a first fuel subsystem, comprising
a first fuel tank configured to hold a supply of first fuel, and
a first fuel pump configured to pump the first fuel out of the first fuel tank;
a second fuel subsystem, comprising
a second fuel tank configured to hold a supply of second fuel, and
a second fuel pump configured to pump the second fuel out of the second fuel tank;
a junction configured to receive first fuel from the first fuel subsystem responsive to the system operating in a first fuel consuming mode, and to receive second fuel from the second fuel subsystem responsive to the system operating in a second fuel consuming mode;
a high pressure pump configured to receive the fuel passing through the junction and pump the fuel to a high pressure rail of a direct injection combustion engine; and
a purging unit configured to purge the second fuel from the high pressure rail responsive to the system is being switched from the second fuel consuming mode to the first fuel consuming mode, the purging unit comprising a piston and being configured to receive the second fuel on one side of the piston and the first fuel on the other side of the piston.

2. The direct fuel injection bi-fuel system according to claim 1, wherein the first fuel is a liquid fuel and the second fuel is a liquefied gas fuel.

3. The direct fuel injection bi-fuel system according to claim 1, further comprising a controller configured to control operation of the purging unit at least during the switch over between the second fuel and the first fuel by sending signals to a plurality of valves to change a condition of the valves.

4. The direct fuel injection bi-fuel system according to claim 3, further comprising a switch in communication with the controller, the switch being configured to signal the controller to switch the system between the second fuel consuming mode and the first fuel consuming mode.

5. A method of switching between two fuels being provided to a direct injection combustion engine, the method comprising:
pumping a first fuel toa high pressure pump configured to pump the first fuel to a high pressure rail of the direct, injection combustion engine during a first fuel consuming mode;
switching between the first fuel consuming mode and a second fuel consuming mode;
pumping a second fuel to one side of piston contained within a purging unit;
pumping the first fuel to an opposite side of the piston contained the purging unit;
purging the first fuel from the system by increasing the pressure of the second fuel with the purging unit and the increased pressure second to the high pressure fuel pump; and
pumping the second fuel to the high pressure rail without increasing the pressure of the second fuel with the purging unit.

6. The method according to claim 5, wherein the first fuel is a liquefied gas fuel and the second fuel is a liquid

7. The method according to claim 5, wherein the pressure of the second fuel is increased in the purging unit by the piston the fuel.

8. The method according to claim 5, further comprising relieving the pressure of the side of the piston that contacts the first fuel after the purging has been completed.

9. A direct injection bi-fuel system, comprising;
a first fuel subsystem, comprising
a first fuel tank configured to hold a supply of first fuel, and
a first fuel pump configured to pump the first fuel out of the first fuel tank:
a second fuel subsystem, comprising
a second fuel tank configured to hold a supply of second fuel, and
a second fuel pump configured to pump the second fuel out of the second fuel tank;
a junction configured to receive first fuel from the first fuel subsystem and to receive second fuel from the second fuel subsystem;
a high pressure pump configured to receive the fuel passing through the junction and pump the fuel to a high pressure rail of a direct injection combustion engine; and
a boost pump configured to receive fuel from the first fuel pump and increase the pressure of the fuel being provided to the junction to purge the second fuel from the high pressure rail responsive to a switch over from the second fuel to the first fuel.

10. The direct injection bi-fuel system according to claim 9, wherein the first fuel is a liquid fuel and the second fuel is a liquefied gas fuel.

11. The direct injection bi-fuel system according to claim 9, further comprising a controller configured to control operation of the first fuel pump, the boost pump, the second fuel pump, and the high pressure pump at least during the switch over between the second fuel and the first fuel.

12. The direct injection bi-fuel system according to claim 11, further comprising a switch in communication with the controller, the switch being configured to sent a signal to the controller to switch the system between the second fuel operating mode and the first fuel operating mode.

13. A method of switching between two fuels being provided to a direct injection combustion engine, the method comprising:
pumping a first fuel to a high pressure pump configured to pump the first fuel to a high pressure rail of the direct injection combustion engine during a first fuel consuming mode;
switching between the first fuel consuming mode and a second fuel consuming mode;
pumping a second fuel to a boost pump;
purging the first fuel from the system by increasing the pressure of the second fuel with the boost pump and pumping the increased pressure second fuel to the high pressure fuel pump; and
pumping the second fuel to the high pressure rail without increasing the pressure of the second fuel with the boost pump.

14. The method according to claim 13, wherein the first fuel is a liquefied gas fuel and the second fuel is a liquid fuel.
